# DEMANDE DE BREVET EUROPEEN

(11) **EP 4 765 055 A1**
(43) Date de publication de la demande: **24.06.2026**
(21) Numéro de dépôt: 25222236.9
(22) Date de dépôt: 10.12.2025
(51) Int. Cl.: G07C 9/00, G21F 5/015, G06Q 10/0832, G07C 9/27

(54) **SYSTÈME D'EMBALLAGE D'UN ARTICLE COMPRENANT UNE CLEF ÉLECTRONIQUE**

(30) Priorité: 13.12.2024 BE 202405889
(71) Demandeur: Vortal, 1490 Court-Saint-Etienne (BE)
(72) Inventeur: Daman, Marc, 1490 Court-Saint-Etienne (BE)
(74) Mandataire: Connor, Marco Tom

(57) **Abrégé**

L'invention concerne un système d'emballage d'un article (30) comprenant,
• Une caisse d'emballage (1) configurée pour contenir un article (30) dans une cavité (1c) et comprenant un couvercle (1L) configuré pour passer à une position fermée et comprenant une serrure électronique (3) comprenant un numéro d'identification (3ID) r,
• Une clef électronique configurée pour être autorisée à déverrouiller une serrure électronique (3) selon son numéro d'identification,
• Un appareil d'autorisation (10) comprenant un lecteur (13ID) configuré pour lire un code d'autorisation (23ID) envoyé à distance et associé à un ou plusieurs numéros d'identification (3ID) de serrures électroniques (3), l'appareil étant configuré pour passer une clef électronique au statut de clef autorisée (12a) l'autorisant à déverrouiller les serrures électroniques (3) dont les numéros d'identification (3ID) sont compris dans le code d'autorisation (23ID).

## Description

### DOMAINE DE L'INVENTION

La présente invention se rapporte à un système d'emballage permettant à un expéditeur de verrouiller un article dans une caisse d'emballage, de l'expédier à un destinataire et ne permettre au destinataire de déverrouiller la caisse d'emballage pour accéder à l'article qu'une fois un code d'autorisation communiqué à distance par l'expéditeur ou un tiers. La présente invention permet de garder confidentiel un article stocké chez le destinataire, sans que le destinataire ne puisse y accéder tant qu'un critère prédéfini n'est pas satisfait.

### ARRIERE-PLAN TECHNOLOGIQUE

Lorsqu'un expéditeur envoie un paquet à un destinataire, l'expéditeur n'a généralement plus beaucoup de contrôle sur ce qui arrive à son paquet, sur qui va l'ouvrir, quand il va être ouvert, etc. Pour s'assurer que seuls des personnes autorisées peuvent ouvrir le paquet, US10867457 propose un système de contrôle électronique d'ouverture d'un container verrouillé par une serrure électronique et utilisant par exemple un smartphone pour scanner et comparer, d'une part, un identifiant d'un paquet et, d'autre part un badge d'identification du destinataire. Si ce dernier est autorisé à ouvrir le container, la serrure électronique s'ouvre automatiquement donnant ainsi accès à son contenu au destinataire.

Dans la même logique que dans US10867457 de ne permettre l'ouverture d'un paquet qu'une fois le destinataire identifié comme étant autorisé, US10097353 décrit un système comprenant un dispositif utilisateur qui stocke une clé électronique privée correspondant à un profil utilisateur. Lorsqu'une commande de produit est associée au profil utilisateur, une clé publique appariée à la clé privée est encodée sur un support de stockage du paquet. Lorsque le paquet est approché du dispositive utilisateur, celui-ci envoie un signal sans fil qui déverrouille automatiquement le paquet dans le cas où la clé publique encodée sur le support de stockage correspond à la clé privée stockée sur le dispositive utilisateur. Ces deux exemples permettent de s'assurer que le paquet est bien ouvert par son vrai destinataire et pas par une personne tierce, non-autorisée.

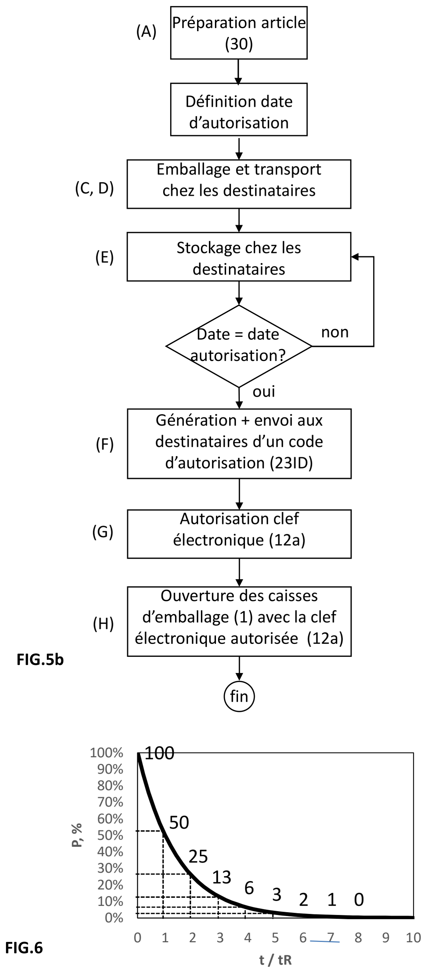

Il existe, cependant, des situations où un article doit être expédié à un destinataire, mais celui-ci n'a le droit d'avoir accès à l'article qu'après en avoir reçu l'autorisation même si l'article est stocké chez le destinataire. Par exemple, des radioisotopes sont utilisés en médecine pour des traitements de diagnostic comme marqueurs et dans certains cas des traitements de thérapie. Certains de ces radioisotopes ont des ½-vies de quelques minutes à quelques heures seulement. Le tableau 1 liste des exemples de radioisotopes utilisés en médecine ainsi que leur ½-vie. La ½-vie d'un radioisotope définit le temps nécessaire à diminuer une population du radioisotope de moitié. La Figure 6 illustre graphiquement la diminution géométrique de la population, P, d'un radioisotope en fonction du temps exprimé en unités de ½-vie, t / tR, où tR est la ½-vie du radioisotope, suivant l'équation, P(t / tR) = exp(ln(2) t / TR)). Par exemple, avec une ½-vie de 20 min, une population initiale de radioisotope, ¹³C serait réduite en 1h à 13% de la population initiale (cf. P(t / tR) dans la Figure 6 à t / tR = 60 / 20 = 3). Une fois produits, l'expédition des radioisotopes, doit donc se faire le plus rapidement possible afin que le destinataire reçoive une population suffisante de radioisotope pour son application.

**Tableau 1 : Exemples de radioisotopes utilisés dans des applications médicale, ainsi que leur ½-vie**

| **radioisotope** | ¹⁵O | ¹³N | ¹¹C | ⁶⁸Ga | ¹⁸F | ^{99m}Tc | ¹²³I |
|---|---|---|---|---|---|---|---|
| **½-vie, tR** | 2 min | 10 min | 20 min | 68 min | 110 min | 6h | 13.2h |

Comme les radioisotopes sont le plus souvent injectés dans un corps, il est important de s'assurer de sa qualité. Les radioisotopes doivent donc être conformes à des critères de qualité préétablis avant de pouvoir être utilisés par le destinataire (généralement une clinique). Les tests pour établir si les radioisotopes satisfont les critères prennent cependant un certain temps. Selon la ½-vie du radioisotope, il vaut mieux expédier le radioisotope au destinataire avant d'avoir les résultats des tests et avertir le destinataire qu'il peut utiliser le radioisotope une fois les résultats des tests disponibles et positifs afin de raccourcir le temps entre la production et l'utilisation du radioisotope. Cela se passe normalement bien, mais il peut y avoir des cas où un clinicien, ne pouvant faire attendre plus longtemps son patient et conscient de la diminution rapide de la population de l'isotope ne l'injecte dans le patient avant d'avoir reçu le feu vert. Cette situation, heureusement très rare, est inacceptable car elle fait courir un très grand risque au patient au cas où l'isotope serait non conforme aux critères de qualité.

Un autre exemple est la distribution à différents centres d'examen des questions d'un examen centralisé qui aura lieu à une date ultérieure. Par exemple, les questions d'une épreuve du baccalauréat sont distribuées à tous les centres d'examen d'un département plusieurs jours avant la date de l'épreuve. Il arrive que des fuites se produisent et que les questions soient mises de manière frauduleuse à la disposition des candidats. On peut aussi citer des urnes de vote qui peuvent également faire l'objet de fraudes dans leur trajet entre les bureaux de vote et les bureaux de dépouillement.

Pour résoudre ce problème, on peut imaginer que l'expéditeur et le destinataire aient tous les deux une clef permettant de verrouiller et déverrouiller la caisse d'emballage contenant l'article. Mais cette solution est peu satisfaisante car l'expéditeur devrait avoir autant de clefs qu'il n'a de caisses d'emballage et devrait s'assurer qu'un même destinataire reçoive toujours la même caisse d'emballage qui peut être déverrouillée par la clef en sa possession. De plus, cela ne permet pas d'interdire au destinataire d'accéder à l'article avant d'en avoir reçu l'autorisation.

Des radio-étiquettes (RFID-tags) peuvent être utilisées pour identifier les caisses d'emballage mais ne permettent pas d'autoriser ou pas le déverrouillage de celles-ci. On peut proposer une serrure d'une caisse ayant un code alphanumérique permettant de déverrouiller la serrure et n'envoyer le code alphanumérique qu'une fois le destinataire autorisé à accéder à l'article. Cependant cette solution devient fort inconfortable lorsque le destinataire reçoit plusieurs caisses d'emballage, ayant chacune son propre code alphanumérique qu'il faut entrer sans se tromper de caisse et sans se tromper dans le code.

On peut également imaginer une serrure programmée pour se déverrouiller à un temps donné, mais cette solution ne conviendrait que pour des situations où la caisse ne peut pas être ouverte avant un temps donné et pas aux cas où l'autorisation peut être donnée à des temps différents selon différents critères (p.ex., le résultat positif de critères de qualité de l'article). De plus, une serrure munie d'un minuteur consomme de l'énergie et demande donc un suivi pour s'assurer que les batteries sont toujours suffisamment chargées.

A ce jour, ce problème assez simple d'autorisation différée et à distance de déverrouillage d'une caisse d'emballage n'a pas de solution satisfaisante. La présente invention présente un système d'emballage comprenant une caisse d'emballage adaptée à enfermer un article et munie d'une serrure verrouillée qui ne peut être déverrouillée qu'avec une clef autorisée, qui est par défaut non-autorisée à déverrouiller cette serrure. La présente invention et ses avantages sont décrits plus en détails dans les sections suivantes.

### RESUME DE L'INVENTION

La présente invention est décrite dans les revendications indépendantes ci-jointes. Des variantes préférées sont définies dans les revendications dépendantes. En particulier, la présente invention concerne un système d'emballage d'un article comprenant,
- Une caisse d'emballage configurée pour contenir un article dans une cavité et comprenant un couvercle configuré pour passer entre une position ouverte donnant accès à la cavité et une position fermée interdisant l'accès à la cavité, la caisse d'emballage étant munie d'une serrure électronique comprenant un numéro d'identification et configurée pour verrouiller le couvercle dans la position fermée et pour ne permettre son déverrouillage qu'à l'aide d'une clef électronique autorisée à la déverrouiller,
- La clef électronique est par défaut dans un statut non-autorisé à déverrouiller une quelconque serrure électronique et est e configurée pour passer,
   ∘ du statut de clef non-autorisée par défaut, dans lequel la clef non-autorisée ne peut pas déverrouiller les serrures électroniques
   ∘ à un statut de clef autorisée dans lequel la clef autorisée est apte à déverrouiller les serrures électroniques dont elle a reçu l'autorisation selon le numéro d'identification.
- Un appareil d'autorisation comprenant un lecteur configuré pour lire un code d'autorisation associé à un ou plusieurs numéros d'identification de serrures électroniques, l'appareil étant configuré pour changer un statut d'une clef électronique du statut de clef non-autorisée au statut de clef autorisée autorisant la clef électronique autorisée à déverrouiller l'une ou plusieurs serrures électroniques dont le ou les numéros d'identification sont compris dans le code d'autorisation.
- Une centrale de libération configurée pour générer et envoyer à distance le code d'autorisation comprenant une liste d'une ou plusieurs caisses d'emballage à un destinataire en possession de la ou des plusieurs caisses d'emballage, de l'appareil d'autorisation et de la clef électronique, uniquement après que des critères prédéfinis ne soient satisfaits, qui sont indépendants du ou des destinataires et nécessaires à l'autorisation de l'ouverture de la ou des plusieurs caisses d'emballage par la clef électronique autorisée.

Le code d'autorisation peut être un code QR ou un code-barres ou un code alphanumérique et dans lequel le lecteur (13ID) est un lecteur de code QR ou de code-barres ou une interface pour entrer le code alphanumérique.

Dans une variante préférée de l'invention, le système d'emballage est adapté au transport de l'article consistant en un radioisotope ayant une ½-vie de préférence inférieure à 24h, le système d'emballage comprenant,
- une fiole configurée pour enfermer le radioisotope et
- un récipient blindé configuré pour enfermer la fiole enfermant le radioisotope et pour être enfermé dans la cavité de la caisse d'emballage.
Ce système d'emballage définit de préférence un colis de Type A.

La présente invention concerne également une méthode pour empêcher l'ouverture d'une caisse d'emballage contenant un article sans en avoir reçu l'autorisation au préalable qui est délivrée selon des critères prédéfinis. La méthode comprend l'utilisation d'un système d'emballage tel que défini supra de la manière suivante.
(A) un expéditeur emballe chaque article dans une caisse d'emballage et verrouille la serrure électronique avec le couvercle en position fermée,
(B) les caisses d'emballage sont livrées à un ou plusieurs destinataires, chaque destinataire possédant un appareil d'autorisation et au moins une clef électronique non-autorisée,
(C) tant que des critères prédéfinis indépendants du ou des destinataires et nécessaires à l'autorisation de l'ouverture d'une ou plusieurs caisses d'emballage ne sont pas satisfaits, la ou les clefs électroniques (3) correspondantes demeurent dans le statut de clef non-autorisée et la ou les caisses d'emballage (1) ne peuvent être ouvertes par le ou les destinataires correspondants,
(D) une fois que les critères prédéfinis sont satisfaits, la centrale de libération (100) génère un code d'autorisation comprenant les numéros d'identification des serrures électroniques des caisses envoyées à chaque destinataire et les envoie aux destinataires correspondants,
(E) à l'aide de son appareil chaque destinataire change le statut de sa clef électronique de clef non-autorisée à clef autorisée pour les serrures électroniques qui lui correspondent et qui sont contenues dans le code d'autorisation qu'il a reçu, et
(F) chaque destinataire peut déverrouiller la serrure électronique des caisses d'emballage qu'il a reçues à l'aide de sa clef autorisée et peut avoir accès à l'article qui satisfait les critères prédéfinis.

Dans une variante préférée, si les critères prédéfinis ne sont pas satisfaits, l'expéditeur ou le tiers n'envoie pas le code d'autorisation et informe chaque destinataire que les caisses d'emballage correspondantes seront reprises par l'expéditeur ou le tiers.

Cette méthode est particulièrement adaptée au cas où l'article est un radioisotope de ½-vie de préférence inférieure à 24h. La méthode comprend alors les étapes suivantes.
- un producteur produit le radioisotope et enferme le radioisotope dans des fioles. La fiole est de préférence enfermée dans un récipient blindé formant ainsi de préférence un colis de Type A.
- le producteur analyse le radioisotope produit afin de déterminer s'il est conforme à des critères de qualité du radioisotope définissant les critères prédéfinis,
- l'expéditeur emballe chaque fiole, de préférence contenue dans le récipient blindé, dans une caisse d'emballage et verrouille la serrure électronique avec le couvercle en position fermée,
- les caisses d'emballage sont livrées à un ou plusieurs destinataires, chaque destinataire possédant un appareil d'autorisation et au moins une clef électronique non-autorisée,
- le ou les destinataires stockent les caisses d'emballage qui ne peuvent être ouvertes sans les codes d'autorisation correspondants permettant de passer les clefs non-autorisées au statut de clefs autorisées permettant de les ouvrir,
- une fois que les analyses du radioisotope sont terminées et que le radioisotope est considéré comme étant conforme aux critères de qualité prédéfinis, le producteur génère un code d'autorisation comprenant les numéros d'identification des serrures électroniques (3) des caisses envoyées à chaque destinataire et les envoie aux destinataires correspondants,
- chaque destinataire fait lire le code d'autorisation (23ID) qu'il a reçu à son appareil d'autorisation (10) et, à l'aide de son appareil d'autorisation, change le statut de sa clef électronique de clef non-autorisée à clef autorisée pour les serrures électroniques qui lui correspondent et qui sont contenues dans le code d'autorisation qu'il a reçu, et
- chaque destinataire peut déverrouiller les caisses d'emballage qu'il a reçues avec la clef autorisée et peut avoir accès à le radioisotope (qui est certifié conforme aux critères de qualité.

Dans le cas de radioisotopes, un temps (tB) nécessaire à compléter les analyses du radioisotope et à déterminer si le radioisotope est conforme aux critères de qualité du radioisotope est de préférence,
- plus long qu'un temps tC nécessaire à l'emballage du radioisotope (étape C) (i.e., tB > tC) et
- encore de préférence, plus long qu'un temps (tC + tD) nécessaire à l'emballage du radioisotope (étape C) et à sa livraison à l'un ou aux plusieurs destinataires (étape D) (i.e. tB > (tC + tD)), laissant les caisses d'emballage verrouillées chez l'un ou plusieurs destinataires pendant un temps (tE = tB - (tC + tD)), jusqu'à la réception du code d'autorisation.

Il est également préféré que le temps (tB) nécessaire à compléter les analyses du radioisotope et à déterminer si le radioisotope est conforme aux critères de qualité du radioisotope soit inférieur à deux ½-vie, tR, du radioisotope, de préférence inférieur à une ½ vie, tR, du radioisotope (i.e., tB < 2tR, de préférence, tB < tR). Par exemple, la ½-vie du radioisotope peut ne pas dépasser plus que 14h ; de préférence pas plus que 6h, encore pas plus que 2h. Des exemples de radioisotopes selon ces critères incluent, ¹³N de ½-vie de 10 min, ou ¹¹C de ½-vie de 20 min, ⁶⁸Ga de ½-vie de 68 min, ou ¹⁸F de ½-vie de 110 min, ou ^{99m}Tc de ½-vie de 6 h, ou ¹²³I de ½-vie de 13.2 h.

La méthode de la présente invention peut être implémentée à d'autres applications, telles que par exemple,
- L'article est livré à l'un ou aux plusieurs destinataires avant paiement de celui-ci et les critères prédéfinis incluent réception du paiement pour l'article, ou
- L'article est un produit chimique et les critères prédéfinis incluent une conformité à des critères de qualité requérant des analyses, ou
- L'article est un produit chimique ou un médicament dont l'utilisation est soumise à une approbation préalable d'un supérieur hiérarchique qui est éloignée du lieu de stockage de l'emballage, ou
- L'article ne peut être accessible qu'à une date prédéfinie postérieure à la date de réception, de préférence la date est prédéfinie par contrat ou par loi.

Dans une variante préférée de l'invention, une fois autorisée, la clef électronique autorisée redevient automatiquement non-autorisée après un temps prédéterminé ou après le déverrouillage de la serrure électronique correspondante.

### BREVE DESCRIPTION DES FIGURES.

Différents aspects de la présente invention sont illustrés dans les Figures suivantes.
- **Figure 1a à 1c :**: illustrent un exemple de système d'emballage selon l'invention configuré pour contenir un radioisotope dans une séquence d'emballage de l'article, (a) couvercle ouvert et article à l'extérieur de la cavité, (b) introduction de l'article dans la cavité et (c) fermeture du couvercle verrouillé par la serrure électronique.
- **Figure 2a:**: illustre une clef électronique non-autorisée.
- **Figure 2b et 2c :**: illustrent (b) un appareil d'autorisation comprenant un lecteur et (c) autorisation de la clef électronique en la couplant à l'appareil d'autorisation et lecture d'un code QR par le lecteur définissant les serrures électroniques que la clef électronique sera autorisée à ouvrir.
- **Figure 3a à 3c** :: illustrent l'exemple de système d'emballage des Figures 1a à 1c, contenant un radioisotope dans la cavité qui est verrouillée, dans une séquence de déballage de l'article (a) déverrouillage de la serrure électronique avec la clef électronique autorisée à l'ouvrir, (b) ouverture du couvercle et extraction de l'article et (c) l'article est disponible au destinataire et la clef électronique se désactive automatiquement après un certain temps ou après le déverrouillage de la serrure électronique.
- **Figure 4a :**: illustre sur une ligne du temps les différentes étapes de livraison d'un radioisotope entre sa production et sa mise à disposition d'un destinataire.
- **Figure 4b** :: présente un organigramme illustrant les étapes de transfert et mise à disposition d'un radioisotope à un destinataire selon l'invention.
- **Figure 5a** :: illustre sur une ligne du temps les différentes étapes de livraison d'un article entre sa production et sa mise à disposition d'un destinataire dont le critère prédéfini est une date.
- **Figure 5b** :: présente un organigramme illustrant les étapes de transfert et mise à disposition d'un article selon la Figure 5a à un destinataire selon l'invention.
- **Figure 6** :: présente un graphe illustrant la dégradation d'un radioisotope en fonction du temps compté en unités de ½ vie du radioisotope (= t / tR).

### DESCRIPTION DETAILLEE DE L'INVENTION

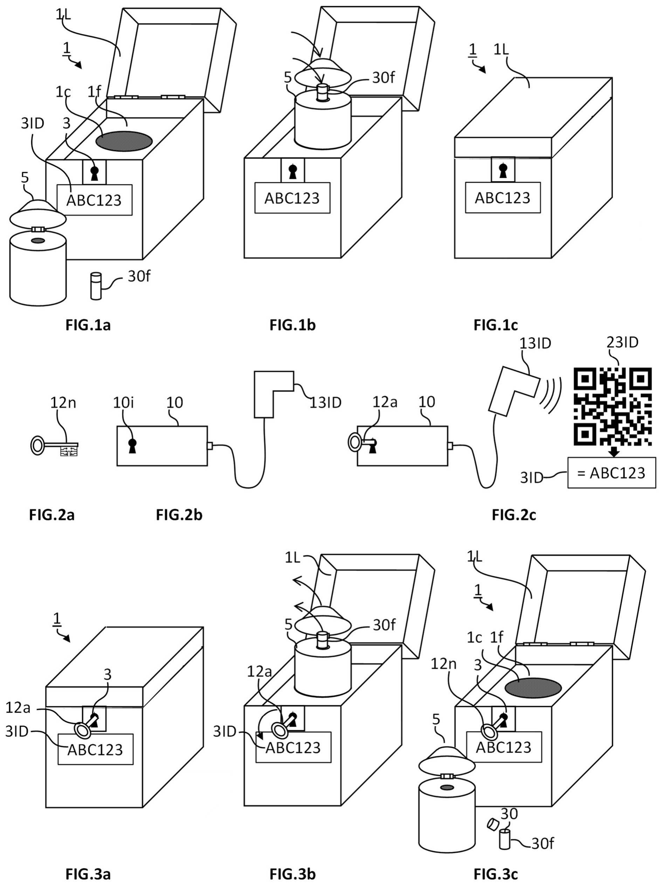

Les Figures 1a à 1c, 2a et 2b illustrent les différents composants formant le système d'emballage de la présente invention qui comprend,
- une caisse d'emballage (1) équipée d'une serrure électronique (3),
- une clef électronique (12n) physique configurée pour être introduite dans la serrure électronique mais qui est par défaut non-autorisée à déverrouiller la serrure électronique (3), et
- un appareil d'autorisation (10) configuré pour autoriser la clef électronique à déverrouiller la serrure de la caisse d'emballage à l'aide d'un code d'autorisation (23ID), et
- une centrale de libération (100) configurée pour générer et envoyer à distance le code d'autorisation (23ID).

Comme illustré aux Figures 1a à 1c et 3a à 3c, la caisse d'emballage (1) est configurée pour contenir un article (30) dans une cavité (1c). Elle comprend un couvercle (1L) configuré pour passer entre une position ouverte donnant accès à la cavité (1c) et une position fermée interdisant l'accès à la cavité. La caisse d'emballage est munie d'une serrure électronique (3) comprenant un numéro d'identification (3ID). La serrure électronique (3) est configurée pour verrouiller le couvercle dans la position fermée et pour ne permettre son déverrouillage qu'à l'aide d'une clef électronique autorisée (12a) à la déverrouiller.

Par défaut, la clef électronique (3) se trouve dans un statut non-autorisé à déverrouiller une quelconque serrure électronique (3). Elle est cependant configurée pour passer,
- du statut de clef non-autorisée (12n) par défaut, dans lequel la clef non-autorisée ne peut pas déverrouiller les serrures électroniques
- à un statut de clef autorisée (12a) dans lequel la clef autorisée (12a) est apte à déverrouiller les serrures électroniques (3) dont elle a reçu l'autorisation selon le numéro d'identification (3ID).

L'appareil d'autorisation (10) comprend un lecteur (13ID) configuré pour lire un code d'autorisation (23ID) associé à un ou plusieurs numéros d'identification (3ID) de serrures électroniques (3). L'appareil est configuré pour changer le statut d'une clef électronique du statut de clef non-autorisée (12n) au statut de clef autorisée (12a), autorisant la clef électronique autorisée (12a) à déverrouiller l'une ou plusieurs serrures électroniques (3) dont le ou les numéros d'identification (3ID) sont compris dans le code d'autorisation (23ID).

La clef électronique (3) physique et l'appareil d'autorisation (10) sont en possession du destinataire de l'article. Cependant, même s'il est en possession de la caisse d'emballage, le destinataire ne peut déverrouiller la serrure électronique (3) avec sa clef électronique qui est par défaut non-autorisée, tant qu'il ne reçoit pas le code d'autorisation (23ID) envoyé par la centrale de libération (100) lui permettant de passer sa clef électronique au statut de clef autorisée (12a) à déverrouiller la serrure électronique (3) correspondant au numéro d'identification(3ID) indiqué dans le code d'autorisation (23ID). Une même clef peut être autorisée à déverrouiller les serrures de plusieurs caisses d'emballage selon une liste de numéros d'identification (3ID) contenue dans le code d'autorisation (23ID).

### L'ARTICLE (30)

L'article (30) peut être de toute nature, solide, liquide, gazeux, tant qu'il peut être contenu dans la cavité d'une caisse d'emballage. L'article peut être contenu dans un contenant qui lui-même est placé dans la cavité de la caisse d'emballage. Ceci s'applique surtout (mais pas seulement) aux articles liquide et gazeux. Par exemple, les Figures 1a et 3c montrent un article (30) contenu dans une fiole (30f) qui est elle-même placée dans un récipient (5) qui est placé dans la cavité comme illustré aux Figures 1b et 3b.

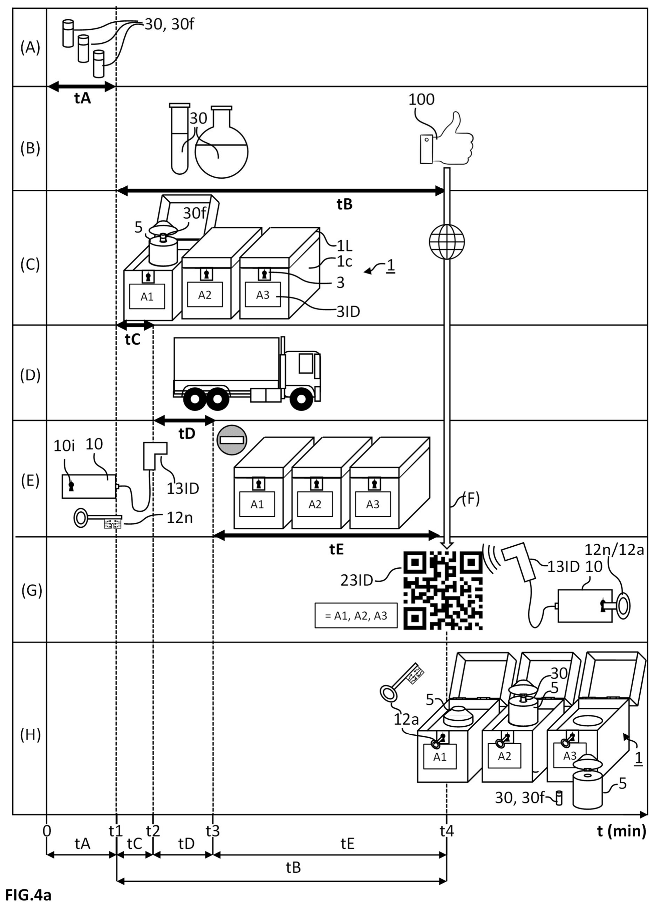

Dans une variante préférée de l'invention, l'article (30) est un radioisotope caractérisé par sa ½-vie. Comme discuté plus haut, les radioisotopes à usage médical doivent impérativement passer avec succès des tests de qualité avant d'être injectés dans le corps d'un patient. Comme illustré à la Figure 4a, comme les tests de qualité prennent un temps, tB, les radioisotopes ne peuvent être utilisés avant le temps, tB, qui est incompressible. Si on attend d'obtenir les résultats des tests de qualité avant d'envoyer les radioisotopes, le destinataire ne pourrait les recevoir avant un temps (tB + tD) où tD, est le temps de transport de l'article jusqu'au destinataire. Le temps d'emballage, tC, n'est pas pris en compte, car l'article peut être emballé pendant le temps, tB, de tests, avant que les résultats des tests de qualité soient disponibles. Cela peut être tentant pour un destinataire d'ouvrir la caisse d'emballage avant la fin des tests et d'injecter un radioisotope dans le corps d'un patient sans avoir la certitude que le radioisotope soit conforme aux critères de qualité. La présente invention permet de bloquer cette tentation, puisque le destinataire ne pourra déverrouiller la caisse d'emballage de la présente invention qu'une fois qu'il aura reçu le code d'autorisation (23ID) envoyée par l'expéditeur ou un tiers autorisé et permettant d'autoriser la clef électronique à ouvrir une ou plusieurs caisses d'emballage (1) identifiées par leur numéro d'identification (3ID)

A cause de la réduction exponentielle de la population de radioisotope avec le temps, il est important de réduire un rapport entre le temps nécessaire pour que le destinataire ait accès à l'article (30) une fois produit et la ½-vie, tR, du radioisotope. Si on attend le temps tB de réception des résultats des tests de qualité avant d'expédier le radioisotope, ce rapport devient (tB + tD) / tR. Si au contraire on emballe et expédie le radioisotope à son destinataire pendant que les tests sont en cours et avant d'en avoir réçu les résultats, ce rapport se réduit à, tB / tR. Pour cette raison, il est d'usage d'expédier les radioisotopes avant d'obtenir les résultats des tests de qualité afin que le destinataire puisse les utiliser un temps tB après leur production, dès que les résultats des tests de qualités sont disponibles (et positifs).

La présente invention est particulièrement adaptée pour le transport de radioisotopes ayant une ½-vie de préférence inférieure à 24 h, tels que par exemple, les radioisotopes listés dans le Tableau 1, ¹⁵O, ¹³N, ¹¹C, ⁶⁸Ga¹⁸F, ^{99m}Tc, ¹²³I.

En général, les radioisotopes ayant une ½-vie inférieure à 30 min sont de préférence produits sur le lieu d'utilisation et ne sont pas expédiés, car la population d'isotopes serait réduite trop drastiquement pendant le temps nécessaire à la livraison de ceux-ci. Cela concerne par exemple, ¹⁵O, ¹³N, ¹¹C qui ont des ½-vies de 2, 10, et 20 min, respectivement. Même dans ce cas, le système d'emballage de la présente invention serait adapté car le laboratoire d'une clinique produisant les radioisotopes (= expéditeur) peut les transférer au service de la même clinique (=destinataire) qui en aura besoin, mais qui n'y aura accès qu'une fois les tests de qualité terminés et positifs.

En interdisant le déverrouillage des caisses d'emballage (1) contenant les radioisotopes avant l'envoi du code d'autorisation (23ID), on s'assure que personne n'utilisera les radioisotopes avant le résultat positif des tests de qualité.

Par extension, les articles (30) peuvent être des produits chimiques ou alimentaires ayant une stabilité limitée dans le temps et soumis à des tests de qualité avant leur utilisation ou consommation. Les articles peuvent être des documents qui doivent rester confidentiels jusqu'à une date donnée, tels que des questions d'examen qui doivent rester confidentielles jusqu'au jour de l'épreuve. L'article (30) peut également comprendre des bulletins de votes dans une urne scellée qui doivent rester confidentiels jusqu'au moment et lieu où le dépouillage doit commencer. De manière alternative, les articles peuvent être des articles vendus par correspondance et ne permettant l'accès à l'article qu'une fois son paiement reçu.

### CAISSE D'EMBALLAGE (1)

La caisse d'emballage (1) peut avoir toute taille et géométrie adaptées à contenir l'article (30). Elle doit comprendre une cavité (1c) apte à recevoir l'article (30) et un couvercle (1L) configuré pour passer entre une position ouverte donnant accès à la cavité (1c) et une position fermée interdisant l'accès à la cavité (1c). La caisse d'emballage est également munie d'une serrure électronique (3) configurée pour verrouiller le couvercle dans la position fermée. La serrure électronique est associée à un numéro d'identification (3ID) et ne peut être déverrouillé qu'à l'aide d'une clef électronique autorisée (12a) à la déverrouiller. A l'exception de la serrure qui doit être une serrure électronique (3) la caisse d'emballage (1) de la présente invention est semblable à toute caisse d'emballage permettant le verrouillage du couvercle (1L) en position fermée. Le couvercle (1L) reste de préférence solidaire à la caisse d'emballage même en position ouverte. Par exemple, le couvercle peut être couplé au reste de la caisse d'emballage par des gonds.

Selon le type d'article (30) qu'elle doit contenir, la caisse d'emballage peut être construite avec tout matériau satisfaisant aux besoins de transport et d'empêcher l'accès à l'article qu'elle contient à quiconque ne possédant pas une clef électronique autorisée (12a) à la déverrouiller. Par exemple, la caisse d'emballage peut être en bois, par exemple en contreplaqué, en métal, par exemple en aluminium ou en acier, en céramique, par exemple en verre, ou en matériau polymère thermoplastique, tels que PE, PP PET, PA ou en matériau polymère thermodurci telle qu'un époxyde ou un polyester. Les matériaux polymères sont de préférence renforcés de fibres de renfort courtes ou longues, par exemple des fibres de verre, de carbone, d'aramide ou végétales. Pour augmenter la résistance mécanique aux chocs, les coins de la caisse d'emballage peuvent être renforcés par des renforts en matériaux plus durs ou, au contraire, amortissants permettant d'absorber une partie de l'énergie provoquée par des chocs.

La cavité (1c) peut être fourrée par un matériau amortissant qui est moins rigide que le matériau formant la caisse d'emballage (1). Par exemple, le matériau amortissant peut être une mousse en copeaux ou formant une structure monolithique remplissant une portion de la cavité (1c). De préférence, la cavité comprend une mousse (1f) monolithique avec un découpage épousant la géométrie de l'article (30) ou d'un récipient (5) intermédiaire contenant l'article (30). Par exemple, comme illustré aux Figures 1a, 1b, 3b et 3c, la caisse d'emballage peut être destinée au transport de radioisotopes. Le radioisotope peut être enfermé dans une fiole (30f). Afin de contenir les radiations radioactives du radioisotope, la fiole (30f) contenant le radioisotope peut être enfermée dans un récipient (5) blindé, configuré pour absorber une partie au moins des radiations. La caisse d'emballage comprend de préférence une mousse (1f) insérée dans la cavité (1c) et comprenant une découpe épousant la géométrie du récipient (5) blindé afin de le stabiliser dans la cavité (1c). Avec le récipient (5) blindé, la caisse d'emballage (1) définit de préférence un colis de Type A tel que défini dans, IAEA Safety Standards, "Regulations for the Safe Transport of Radioactive Material," 2018, Specific Safety Requirements No. SSR-6 (Rev. 1), disponible sur la page web, https://www-pub.iaea.org/MTCD/Publications/PDF/PUB1798_web.pdf.

Il est préféré que la caisse d'emballage comprenne une ou des poignées permettant son transport. Dans une première variante de l'invention, la caisse d'emballage peut comprendre deux poignées placées sur deux faces latérales opposées l'une à l'autre de la caisse permettant le transport de caisses d'emballage (1) lourdes à deux mains. Dans une variante préférée, la caisse d'emballage (1) comprend une poignée permettant le transport de celle-ci par une personne en utilisant une seule main. Par exemple, la poignée peut se trouver au milieu de la face supérieure du couvercle (1L). Cette variante est particulièrement avantageuse pour le transport de radioisotopes, car en portant la caisse d'emballage (1) à une main sur le coté du corps, le radioisotope est plus éloignés des organes sensibles aux radiations (e.g., organes génitaux, appareil digestif, foie, etc.) qu'en transportant la caisse d'emballage devant soi à deux mains comme dans la première variante, ce qui réduit considérablement l'exposition de ces organes aux radiations dont l'intensité décroit rapidement avec la distance..

### SERRURE ET CLEF ELECTRONIQUES (3, 12a,12n)

Des clefs et serrures électroniques, parfois nommées clefs et serrures digitales, sont bien connues et sont disponibles sur le marché. Il s'agit ici de clefs électroniques physiques à insérer dans la serrure électronique et à manipuler pour dverrouiller la serrure Par exemple, beaucoup de voitures disposent maintenant de clefs électroniques. Des sociétés telles qu'Assa Abbloy, Makekeylock, ou Salto proposent des gammes de clefs et serrures électroniques programmables qui peuvent être utilisées dans la présente invention.

Chaque serrure électronique (3) est identifiée par un numéro unique d'identification (3ID) connu de l'expéditeur. L'expéditeur sait donc à tout moment quelles caisses d'emballages caractérisées par le numéro d'identification (3ID) de leur serrure électronique (3) se trouvent chez chaque destinataire. La serrure électronique se verrouille de préférence automatiquement simplement en amenant le couvercle (1L) en position fermée. Les clefs électroniques sont par défaut non-autorisée (12n), c'est-à-dire que, par défaut, elles ne peuvent ouvrir aucune serrure électronique (3).

Chaque destinataire possède une clef électronique (12n) (ou plus) et un appareil d'autorisation (10). Comme illustré aux Figures 2b et 2c, l'appareil d'autorisation (10) comprend une interface (10i) pour communiquer avec la clef électronique (12n). L'appareil d'autorisation (10) comprend également un lecteur de code d'autorisation (10L). Le code d'autorisation (23ID) comprend les numéros d'identification (3ID) des serrures électroniques (3) que la clef électronique sera autorisée à déverrouiller. L'appareil d'autorisation est configuré pour programmer la clef électronique (12n) à travers l'interface (10i) de sorte à la faire passer du statut de clef non-autorisée (12n) par défaut au statut de clef autorisée (12a) à déverrouiller les serrures électroniques (3) dont le numéro d'identification (3ID) a été lu par le lecteur (10L). Par exemple, comme illustré de manière schématique aux Figures 2a et 2c, la clef initialement non autorisée (12n) passe au statut de clef autorisée (12a) à travers l'interface (10i) après lecture du code QR comprenant le numéro d'identification (3ID) « ABC123 » de la serrure électronique correspondante, qui peut maintenant être déverrouillée par la clef électronique ainsi autorisée (12a).

Comme illustré à la Figure 3a, la serrure électronique de numéro d'identification (3ID) = « ABC123 » peut être déverrouillée par la clef autorisée (12a). La Figure 3b montre que le couvercle peut alors passer à la position ouverte et donner accès à la cavité (1c) et à l'article (30) qu'elle contient, éventuellement contenue dans un récipient (5) intermédiaire, tel qu'un récipient blindé dans le cas où l'article serait un radioactif. Tant que le destinataire ne reçoir pas le code d'autorisation (23ID), la clef électronique (12n) qu'il possède demeure par défaut non-autorisée à ouvrir une serrure électronique quelconque.

### MACHINE D'AUTORISATION (10)

Chaque destinataire possède un appareil d'autorisation (10). Dans certains cas, l'expéditeur peut faire livrer avec la caisse d'emballage un appareil d'autorisation (10) qui est retournée à l'expéditeur par le service de livraison. L'essentiel est que le destinataire soit en possession d'une machine d'autorisation (10) au moment où les conditions prédéfinies sont remplies et que le code d'autorisation est envoyé au destinataire.

Comme illustré aux Figures 2b et 2c, l'appareil d'autorisation (10) comprend une interface (10i) pour communiquer avec la clef électronique (12n). L'appareil d'autorisation (10) comprend également un lecteur de code d'autorisation (10L). Le code d'autorisation (23ID) comprend les numéros d'identification (3ID) des serrures électroniques (3) que la clef électronique sera autorisée à déverrouiller. Le code d'autorisation (23ID) peut être un code QR, un code barre ou, simplement un code alphanumérique. Dans ces cas, le lecteur (10L) de la machine d'autorisation (10) est un lecteur de codes QR, de codes-barres ou de codes alphanumériques. L'appareil d'autorisation est configuré pour programmer la clef électronique (12n) à travers l'interface (10i) de sorte à la faire passer du statut de clef non-autorisée (12n) par défaut au statut de clef autorisée (12a) à déverrouiller les serrures électroniques (3) dont le numéro d'identification (3ID) a été lu par le lecteur (10L). Par exemple, comme illustré de manière schématique aux Figures 2a et 2c, la clef initialement non autorisée (12n) passe au statut de clef autorisée (12a) à travers l'interface (10i) après lecture du code QR comprenant le numéro d'identification (3ID) « ABC123 » de la serrure électronique correspondante, qui peut maintenant être déverrouillée par la clef électronique ainsi autorisée (12a).

Le système d'autorisation de clefs électroniques (3) par la machine d'autorisation (10) selon la présente invention se distingue des systèmes d'autorisation de l'art antérieur dans lesquels l'autorisation se fait directement par internet via un driver installé dans un ordinateur du destinataire. Une autorisation par internet pose des problèmes de cybersécurité car un ordinateur connecté à internet est vulnérable. De plus, il peut y avoir des coupures d'internet qui rendraient inopérable un tel système d'autorisation. La machine d'autorisation (10) de la présente invention permet d'autoriser des clefs électroniques via un code. Quel que soit le type de code utilisé (QR, barres ou alphanumérique) il peut être envoyé sur un écran de téléphone mobile par messagerie, optionnellement soumis à un contrôle par signature électronique (p.ex. ITSME^{®}), par fax ou par email ou autre messagerie sur un ordinateur sécurisé du destinataire, qu'il suffit d'imprimer. Un code alphanumérique peut même être communiqué oralement par téléphone. Ainsi, avec le système d'autorisation de la présente invention, il n'est pas nécessaire d'installer un driver chez le destinataire et le destinataire ne doit pas nécessairement être connecté à internet pour autoriser une clef électronique, ce qui permet de ne pas affecter la cybersécurité du système informatique du destinataire.

La machine d'autorisation (10) comprend de préférence une mémoire permettant l'enregistrement local de toutes les opérations effectuées avec les clefs. Ceci est, par exemple, particulièrement important dans le cas où le destinataire est un hôpital ou clinique et que l'article (30) est un radioisotope afin de garantir une traçabilité des produits injectés dans les patients.

### METHODE POUR CONTROLLER L'AUTORISATION A DEVERROUILLER UNE SERREURE ELECTRONIQUE

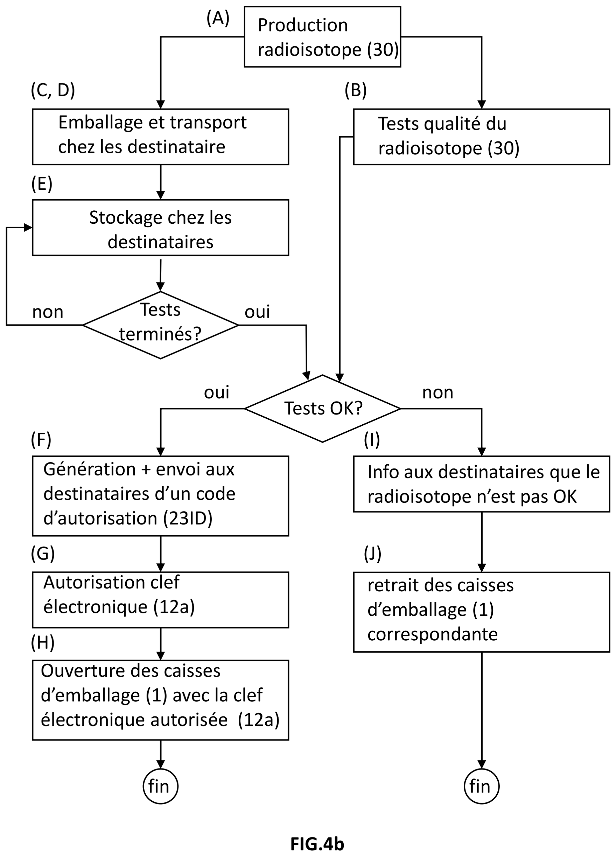

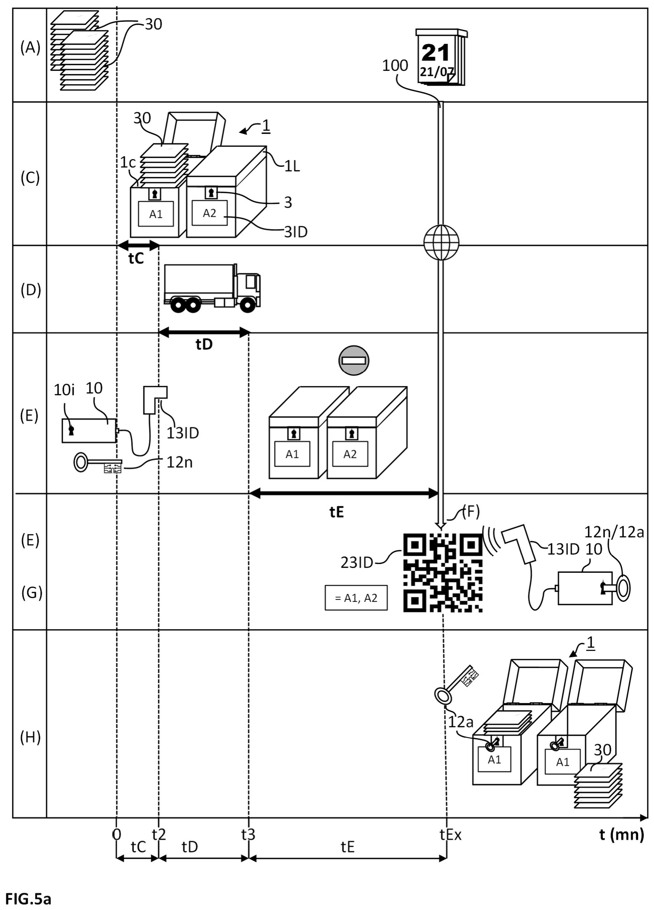

La présente invention concerne également une méthode pour empêcher l'ouverture d'un emballage (1) contenant un article (30) sans en avoir reçu l'autorisation au préalable, qui est délivrée selon des critères prédéfinis. La méthode comprend l'utilisation d'un système d'emballage tel que décrit supra. Comme illustré à l'étape (C) des Figures 4a, 4b, 5a et 5b, l'article (30) est tout d'abord emballé dans une caisse d'emballage (1) et la serrure électronique (3) est verrouillée avec le couvercle (1c) en position fermée. Comme la caisse d'emballage sera dans la plupart des cas expédiée à un destinataire externe l'entité qui a produit l'article (30), cette opération est complétée par un expéditeur. L'expéditeur peut être un département interne de l'entité qui a produit l'article (30) ou une société d'expédition (p.ex., poste, service de distribution, courrier).

Les caisses d'emballage (1) sont livrées à un ou plusieurs destinataires. Chaque destinataire poss7de au moins une clef électronique non-autorisée (12n) et un appareil d'autorisation (10) configuré pour autoriser une clef électronique (12a) à déverrouiller une ou plusieurs caisses d'emballage (1) à la lecture du code d'autorisation (23ID) selon le numéro d'identification (3ID) de leurs serrures électroniques (3) respectives contenus dans le code d'autorisation.

En l'attente des codes d'autorisation correspondants, le ou les destinataires stockent les caisses d'emballage (1) qui ne peuvent être ouvertes sans les codes d'autorisation correspondants permettant de passer les clefs du statut de clefs non-autorisées (12n) au statut de clefs autorisées (12a) permettant de les ouvrir. Une fois que l'ouverture des caisses d'emballage peut être autorisées selon les critères prédéfinis, l'expéditeur ou un tiers habilité génère à travers une station d'autorisation (100), tel qu'un ordinateur, un smartphone, etc., un code d'autorisation (23ID) comprenant les numéros d'identification (3ID) des serrures électroniques (3) des caisses envoyées à chaque destinataire et les envoie aux destinataires correspondants. Chaque numéro d'identification (3ID) correspond à une serrure électronique (3) unique d'une caisse d'emballage (1) unique. L'expéditeur ou le tiers autorisé connait les numéros d'identification (3ID) correspondant à la ou les caisses expédiées à chaque destinataire et peut ainsi envoyer un code d'autorisation (23ID) personnalisé à chaque destinataire comprenant les numéros d'identification (23ID) correspondants. Les codes d'autorisation (23ID) comprenant les numéros d'identification (3ID) des serrures électroniques (3) des caisses envoyées à chaque destinataire peuvent être envoyés aux destinataires correspondants par un courriel, ou par un accès personnalisé à une plateforme internet dans laquelle le code d'autorisation a été introduit, ou via un protocole WAP, incluant messagerie ou SMS ou MMS.

A l'aide de son appareil d'autorisation (10), chaque destinataire change le statut de sa clef électronique de clef non-autorisée (12n) à clef autorisée (12a) pour les serrures électroniques qui lui correspondent et qui sont contenues dans le code d'autorisation (23ID) qu'il a reçu. Le lecteur (10L) permet de lire les numéros d'identification (3ID) des serrures électroniques (3) concernées et permet de limiter automatiquement l'autorisation de la clef électronique à ces serrures électroniques uniquement, sans risque d'erreur humaine de transcription ou d'encodage. Une fois la clef électronique autorisée (12a) à déverrouiller les caisses d'emballage en sa possession, chaque destinataire peut déverrouiller la serrure électronique des caisses d'emballage (1) qu'il a reçues à l'aide de sa clef autorisée (12a) et peut avoir accès à l'article (30) qui satisfait les critères prédéfinis. De préférence, la clef électronique autorisée (12a) redevient automatiquement non-autorisée (12n) après un temps prédéterminé ou après le déverrouillage de la serrure électronique correspondante.

Ce procédé est simple et fiable et a plusieurs avantages. D'une part, chaque serrure électronique (3) est identifiée par son numéro d'identification (3ID) unique. Ainsi une même caisse d'emballage (3) ne doit pas nécessairement être associée à un même destinataire. D'autre part, les serrures électroniques sont passives et ne consomment pas d'énergie. Cela permet de réutiliser les caisses d'emballage (1) autant de fois que nécessaire sans autre entretien que de veiller à leur intégrité physique et hygiéniques (stérilisation si nécessaire), sans devoir surveiller l'état de charge d'une batterie. Enfin, même si la ou les caisses d'emballage (1) sont stockées chez les différents destinataires pendant un certain temps, tE, ceux-ci ne peuvent avoir accès aux articles (30) contenus dans les caisses d'emballage avant que les critères prédéfinis soient remplis et que les destinataires soient autorisés à y avoir accès.

Le système d'emballage et la méthode de la présente invention peuvent être implémentés dans différentes applications.

### APPLICATIONS

Il existe plusieurs applications où un article (30) est livré à un destinataire mais où celui-ci ne peut y avoir accès qu'une fois que les critères prédéfinis ne soient remplis.

Comme discuté plus haut, l'invention est parfaitement adaptée au transport de radioisotopes du lieu de production vers différents destinataires, mais ne donnant accès au radioisotope qu'après la conclusion positive des tests de qualité par l'envoi du code d'autorisation. Par extension, l'article (30) peut être tout produit chimique, alimentaire, ou autres, ayant une stabilité limitée dans le temps et dont l'emploi est sujet à une autorisation préalable par une autorité séparée du destinataire.

L'article (30) peut être les questions à un examen ou concours commun qui doit être distribué aux différents centres où aura lieu l'examen à une date ultérieure. Pour éviter toute fuite des questions avant l'épreuve, le système d'emballage de la présente invention est parfaitement adapté pour garantir la confidentialité des questions. Ainsi, les caisses d'emballage (1) peuvent être livrées aux différents centres n'importe quand avant la date de l'épreuve. Personne ne sera en mesure de déverrouiller les caisses d'emballage (1) avant la réception du code d'autorisation (23ID) envoyé par une autorité centrale à travers la centrale de libération (100) le jour de l'épreuve. On évite ainsi le risque de tricheries. La centrale de libération est un processeur, un ordinateur, un smartphone ou tout autre appareil configuré, d'une part,
- pour générer le code d'autorisation (23ID), de préférence de type QR-code, mais qui peut avoir d'autres formes telles qu'un code-barre et qui liste les numéro d'identification (3ID) des serrures électroniques (3) des caisses d'emballage qui pourront être ouvertes lorsque la clef aura été autorisée et, d'autre part,
- pour envoyer le code d'autorisation (23ID) au destinataire.

Des urnes remplies de bulletins de vote, soit pour leur stockage jusqu'au dernier jour de vote dans le cas d'un vote étalé sur plus d'un jour, soit au moment du transport des urnes des différents bureaux de vote vers un centre de dépouillement afin de les protéger jusqu'au moment où le comptage commencera. Les caisses d'emballage contenant les urnes ne peuvent être ouvertes par les personnes habilitées qu'une fois que toutes les urnes sont arrivées et que le code d'autorisation soit envoyé par une autorité centrale à travers la centrale de libération (100).

Une société qui exporte des produits à l'étranger peut fournir une clef électronique (3) et un appareil d'autorisation (10) aux douanes des pays de l'expéditeur et des destinataires. Des articles de valeur peuvent ainsi être expédiés dans des caisses d'emballage verrouillées tout en permettant un accès aux articles (30) aux douaniers qui désirent les contrôler en leur envoyant sur demande les numéros d'identification (3ID) des caisses d'emballage (1) qu'ils désirent contrôler et en recevant en retour un code d'autorisation (23ID) pour les déverrouiller.

### METHODE APPLIQUEE AU TRANSPORT DE RADIOISOTOPES

Comme discuté, le système d'emballage de la présente invention est particulièrement adapté au transport de radioisotopes qui combinent, d'une part,
- une stabilité limitée dans le temps, caractérisée par leur ½-vie, tR, qui contrôle la vitesse de dégradation de leur population, P(t), de manière exponentielle selon, P(t) = exp(ln(2) t / TR) (cf. Figure 6) et qui pousse à les utiliser aussi vite que possible et, d'autre part,
- l'imposition de normes de qualité qui prennent un certain temps à vérifier par des tests de qualité et qui obligent à retarder l'utilisation des radioisotopes jusqu'à l'obtention de résultats positifs aux tests de qualité.

En l'absence d'un verrouillage de la caisse d'emballage, il est arrivé -très rarement, heureusement- que le destinataire, tiraillé entre ces deux contraintes opposées, décide d'utiliser le radioisotope avant d'en avoir reçu l'autorisation délivrée uniquement en cas d'un résultat positif des tests de qualité. Le système d'emballage de la présente invention permet de verrouiller le radioisotope dans la caisse d'emballage et de ne permettre au destinataire d'accéder au radioisotope qu'après le résultat positif des tests de qualité, à l'aide de la clef électronique passée au statut de clef autorisée (12a) à déverrouiller la caisse d'emballage par l'appareil d'autorisation (10) à l'aide du code d'autorisation (23ID).

Dans le cas de transport de radioisotopes, la caisse d'emballage (3) remplit de préférence les critères d'un colis de Type A. Par exemple, comme illustré aux Figures 1a, 1b, 3b et 3c, le radioisotope peut être contenu dans une fiole (30f) qui est placée dans un récipient (5) blindé dont les parois sont configurées pour absorber une partie de la radioactivité émise par le radioisotope. Les parois peuvent comprendre du plomb ou tout autre matériau caractérisé par une forte absorbance des radiations radioactives.

Ainsi, la méthode appliquée au transport de radioisotopes comprend les étapes illustrées à aux Figures 4a et 4b.

Comme illustré à l'étape (A) des Figures 4a et 4b, un producteur produit le radioisotope et enferme le radioisotope dans des fioles (30f). Cette étape prend un temps, tA. Le radioisotope peut avoir une ½-vie, tR, de préférence inférieure à 24h, de préférence pas plus que 14h, de préférence pas plus que 6h, encore de préférence, pas plus que 2h. Par exemple, le radioisotope peut être choisi parmi, ¹³N de ½-vie de 10 min, ou ¹¹C de ½-vie de 20 min, ⁶⁸Ga de ½-vie de 68 min, ou ¹⁸F de ½-vie de 110 min, ou ^{99m}Tc de ½-vie de 6 h, ou ¹²³I de ½-vie de 13.2 h.

L'étape (B) des Figures 4a et 4b montre que le producteur analyse le radioisotope produit afin de déterminer s'il est conforme aux critères de qualité du radioisotope définissant les critères prédéfinis. Cette étape (B) prend un temps, tB, qui n'est pas négligeable et non compressible. Le temps, tB, doit être le plus court possible afin de permettre au destinataire d'avoir accès au radioisotope avant que sa population ne se réduise considérablement. Par exemple, un rapport, tB / tR, du temps, tB, nécessaire à compléter les tests de qualité sur la ½-vie (tR) du radioisotope est de préférence inférieur à 2 (i.e., tB / tR < 2) correspondant à une population disponible de 25% de la population initiale, de préférence inférieur à 1 (i.e., tB / tR < 1) correspondant à une population disponible de 50% de la population initiale, encore de préférence inférieur à 0.5 (i.e., tB / tR < 0.5) correspondant à une population disponible de 70% de la population initiale. Cependant, le temps, tB, pour compléter les tests de qualité ne peut être réduit infiniment et en général prend un temps supérieur au temps, tC, nécessaire à l'emballage du radioisotope dans la caisse d'emballage et souvent supérieur au temps, tC + tD, nécessaire à l'emballage du radioisotope (étape C décrite plus bas) et à sa livraison à l'un ou aux plusieurs destinataires (étape D décrite plus bas) (i.e. tB > (tC + tD)), laissant les caisses d'emballage (1) verrouillées stockées chez l'un ou plusieurs destinataires pendant un temps, tE, jusqu'à la réception du code d'autorisation (23ID) (cf. étape (E) des Figures 4a et 4b).

L'étape (C) des Figures 4a et 4b illustre l'emballage par l'expéditeur de chaque fiole (30f) dans une caisse d'emballage (1). De préférence les fioles (30f) sont placées dans un emballage blindé (5) avant de les insérer dans la caisse d'emballage. L'expéditeur verrouille la serrure électronique (3) avec le couvercle (1c) en position fermée. De préférence, la serrure électronique (3) se verrouille automatiquement en passant le couvercle de la position ouverte à la position fermée et ne nécessite pas de clef pour la verrouiller.

L'étape (D) des Figures 4a et 4b illustre l'expédition et livraison des caisses d'emballage (1) à un ou plusieurs destinataires. Chaque destinataire possède au moins une clef électronique non-autorisée (12n) et un appareil d'autorisation (10) configuré pour autoriser la clef électronique à déverrouiller les serrures électroniques (3) dont le numéro d'identification (3ID) est contenu dans le code d'autorisation (23ID).

Comme illustré à l'étape (E) des Figures 4a et 4b, en attendant le résultat des tests de qualité, le ou les destinataires stockent les caisses d'emballage (1) qui ne peuvent être ouvertes sans les codes d'autorisation correspondants permettant de passer les clefs non-autorisées (12n) au statut de clefs autorisées (12a) permettant de les ouvrir. Le temps de stockage, tE, est la différence entre le temps, tB, nécessaire à compléter les tests de qualité et les temps (tC + tD) d'emballage et de transport, i.e., tE = tB - (tC + tD). Pendant tout le temps de stockage, tE, le destinataire ne peut avoir accès au radioisotope contenu dans la ou les caisses d'emballage (1).

L'étape (F) des Figures 4a et 4b montre qu'une fois que les analyses du radioisotope sont terminées et que le radioisotope est considéré comme étant conforme aux critères de qualité prédéfinis, le producteur génère à travers la centrale de libération (100) un code d'autorisation (23ID) comprenant les numéros d'identification (3ID) des serrures électroniques (3) des caisses envoyées à chaque destinataire et les envoie aux destinataires correspondants. Le code d'autorisation (31D) peut-être un code QR ou un code-barres ou un code alphanumérique. De préférence, le code d'autorisation est un code QR.

A l'étape (G) des Figures 4a et 4b, chaque destinataire change le statut de sa clef électronique de clef non-autorisée (12n) à clef autorisée (12a) en lisant le code d'autorisation (23ID) qu'il a reçu à l'aide de son appareil d'autorisation (10), pour les serrures électroniques qui lui correspondent et qui sont contenues dans le code d'autorisation (23ID). En lisant le code d'autorisation (23ID), de préférence le code QR, le lecteur (10L) permet d'identifier sans risque d'erreur humaine de transcription les numéros d'identification de toutes les serrures électroniques que la clef électronique sera autorisée à déverrouiller. Comme illustré à l'étape (H) des Figures 4a et 4b, chaque destinataire peut déverrouiller les caisses d'emballage (1) qu'il a reçues avec la clef ainsi autorisée (12a) et peut avoir accès au radioisotope (30) qui est certifié conforme aux critères de qualité.

Comme illustré aux étapes (I) et (J) de la Figure 4b, si les critères prédéfinis ne sont pas satisfaits, l'expéditeur ou le tiers informe les destinataires que le radioisotope ne satisfait pas les critères de qualité requis. Il n'envoie donc pas le code d'autorisation (23ID) et informe chaque destinataire que les caisses d'emballage (1) correspondantes seront reprises par l'expéditeur ou le tiers.

Le système d'emballage et la méthode de la présente invention permettent ainsi de réduite considérablement le risque d'une ouverture non-autorisée des caisses d'emballage (1) et en même temps de réduire le temps, t4, d'ouverture des caisses d'emballage à la durée incompressible, tB, des tests de qualité (i.e., t4 = tB). L'alternative pour éviter une ouverture non-autorisée serait d'attendre les résultats des tests de qualité avant d'expédier les caisses d'emballage, allongeant le temps t4 à t4 = tB + tD, par rapport à la présente invention dans laquelle, t4 = tB. Par exemple, si le radioisotope est du ¹⁸F de ½-vie, tR = 110 min et que les tests de qualité et le transport prennent chacun un temps, tB = tD = 55 min, le temps t4 auquel le destinataire a accès au radioisotope passe de, t4 = tB = 55 min selon l'invention à t4 = tB + tD = 55 + 55 min = 110 min. La population de ¹⁸F après un temps t4 = 55 min est de 70% de la population initiale avec l'invention, alors qu'après un temps, t4 = 110 min, la population de ¹⁸F s'est réduite à 50% de la population initiale seulement.

### METHODE APPLIQUEE AU TRANSPORT D'ARTICLES CONFIDENTIELS JUSQU'A UNE DATE

### DONNEE

La Figure 5aillustre sur une ligne du temps équivalente à celle de la Figure 4a discutée supra pour les radioisotope le cas où le critère prédéfini est une date avant laquelle l'accès à l'article (30) contenu dans les caisses d'emballage (1) est interdit aux destinataires. Ceci s'applique par exemple à des questions d'examens ou concours distribuées aux différents centres d'examen avant la date de l'épreuve et qui doivent rester confidentiels jusqu'à la date de l'épreuve. Cela s'applique également à des bulletins de vote qui doivent rester confidentiels jusqu'au moment où un bureau de dépouillement est prêt pour commencer le dépouillement, soit pour une élection étalée sur plusieurs jours, soit simplement pendant le transfert des bulletins de vote des différents bureaux de vote vers le ou les centres de dépouillement.

Comme illustré à l'étape (C) des Figures 5a et 5b, les questions d'examen ou bulletins de vote ou tout autre article concerné sont emballés dans les caisses d'emballage (1). Les caisses d'emballage (1) sont transportées à l'étape (D) chez les différents destinataires (e.g., centres d'examen ou bureau de dépouillement) où ils sont stockés à l'étape (E) pendant un temps, tE, pendant lequel les destinataires n'ont pas le droit d'accéder aux articles (30).

A la date prévue de l'épreuve ou de dépouillement (ou autre), un code d'autorisation (23ID) est envoyé par la centrale de libération (100) à l'étape (F) aux destinataires par une entité habilitée. Les destinataires peuvent alors autoriser les clefs électroniques en leur possession à déverrouiller les serrures électroniques dont les numéros d'identification (3ID) sont contenus dans les codes d'autorisation que chaque destinataire a reçus (cf. étape (G)). Les caisses d'emballage (1) peuvent donc être déverrouillées par les clefs électroniques autorisées (12n) correspondantes par les destinataires à l'étape (H). Les questions d'examen peuvent alors être distribuées aux candidats sans risque de fuites ou les bulletins de votre peuvent être dépouillés sans risques de fraudes.

La présente invention est adaptée pour ce genre d'applications, permettant de stocker les articles (30) chez les destinataires tout en interdisant l'accès aux articles par les destinataires, jusqu'à ce que la date ou le moment défini pour la mise à disposition des articles aux destinataires. La confidentialité de documents tels que questions d'examen ou bulletins de vote est garantie jusqu'à la date prévue pour leur divulgation.

| **#** | **Caractéristique** |
|---|---|
| 1 | Caisse d'emballage |
| 1c | Cavité de l'emballage |
| 1f | Fourrage de la cavité, p.ex., mousse |
| 1L | Couvercle de l'emballage |
| 3 | Serrure électronique |
| 3ID | Numéro d'identification de serrure électronique |
| 5 | Récipient |
| 10 | Appareil d'autorisation |
| 10i | Interface entre l'appareil d'autorisation et la clef électronique |
| 12a | Clef électronique autorisée à déverrouiller une serrure électronique |
| 12n | Clef électronique non-autorisée à déverrouiller une serrure électronique |
| 13ID | Lecteur de code QR ou barre |
| 23ID | Code d'autorisation |
| 30 | Article |
| 30f | Fiole |
| tA | Temps de production de l'article |
| tB | Temps de test de qualité du radioisotope |
| tC | Temps d'emballage de l'article |
| tD | Temps de transport de l'article |
| tE | Temps de stockage de la caisse d'emballage chez le destinataire avant son ouverture |
| tEx | Date d'autorisation d'accès aux articles (e.g., questions d'examen, bulletins de vote) |

## Revendications

1. Système d'emballage d'un article (30) comprenant,
• Une caisse d'emballage (1) configurée pour contenir un article (30) dans une cavité (1c) et comprenant un couvercle (1L) configuré pour passer entre une position ouverte donnant accès à la cavité (1c) et une position fermée interdisant l'accès à la cavité, la caisse d'emballage étant munie d'une serrure électronique (3) comprenant un numéro d'identification (3ID) et configurée pour verrouiller le couvercle dans la position fermée et pour ne permettre son déverrouillage qu'à l'aide d'une clef électronique physique autorisée (12a) à la déverrouiller,
• La clef électronique est par défaut dans un statut non-autorisé à déverrouiller une quelconque serrure électronique (3) et est e configurée pour passer,
∘ du statut de clef non-autorisée (12n) par défaut, dans lequel la clef non-autorisée ne peut pas déverrouiller les serrures électroniques
∘ à un statut de clef autorisée (12a) dans lequel la clef autorisée (12a) est apte à déverrouiller les serrures électroniques (3) dont elle a reçu l'autorisation selon le numéro d'identification (3ID).
• Un appareil d'autorisation (10) comprenant un lecteur (13ID) configuré pourre un code d'autorisation (23ID) associé à un ou plusieurs numéros d'identification (3ID) de serrures électroniques (3), l'appareil étant configuré pour changer un statut d'une clef électronique du statut de clef non-autorisée (12n) au statut de clef autorisée (12a) autorisant la clef électronique autorisée (12a) à déverrouiller l'une ou plusieurs serrures électroniques (3) dont le ou les numéros d'identification (3ID) sont compris dans le code d'autorisation (23ID),
• Une centrale de libération (100) configurée pour générer et envoyer à distance le code d'autorisation (23ID) comprenant une liste d'une ou plusieurs caisses d'emballage à un destinataire en possession de la ou des plusieurs caisses d'emballage (1), de l'appareil d'autorisation (10) et de la clef électronique (3), uniquement après que des critères prédéfinis ne soient satisfaits, qui sont indépendants du ou des destinataires et nécessaires à l'autorisation de l'ouverture de la ou des plusieurs caisses d'emballage par la clef électronique autorisée.

2. Système d'emballage selon la revendication 1, adapté au transport de l'article (30) co pnsistant en un radioisotope ayant une ½-vie de préférence inférieure à 24h, le système d'emballage comprenant,
• une fiole (30f) configurée pour enfermer le radioisotope et
• un récipient (5) blindé configuré pour enfermer la fiole enfermant le radioisotope et pour être enfermé dans la cavité (1c) de la caisse d'emballage (1).

3. Système d'emballage selon la revendication 2, dans lequel l'emballage est un colis de Type A.

4. Système d'emballage selon l'une quelconque des revendications 1 à 3, dans lequel le code d'autorisation (31D) est un code QR ou un code-barres ou un code alphanumérique et dans lequel le lecteur (13ID) est un lecteur de code QR ou de code-barres ou une interface pour entrer le code alphanumérique.

5. Méthode pour empêcher l'ouverture d'une caisse d'emballage (1) contenant un article (30) sans en avoir reçu l'autorisation au préalable qui est délivrée selon des critères prédéfinis, la méthode comprenant l'utilisation d'un système d'emballage selon l'une quelconque des revendications précédentes de la manière suivante,
(A) un expéditeur emballe chaque article (30) dans une caisse d'emballage (1) et verrouille la serrure électronique (3) avec le couvercle (1c) en position fermée,
(B) les caisses d'emballage (1) sont livrées à un ou plusieurs destinataires, chaque destinataire possédant un appareil d'autorisation (10) et au moins une clef électronique non-autorisée (12n),
(C) tant que des critères prédéfinis indépendants du ou des destinataires et nécessaires à l'autorisation de l'ouverture d'une ou plusieurs caisses d'emballage ne sont pas satisfaits, la ou les clefs électroniques (3) correspondantes demeurent dans le statut de clef non-autorisée et la ou les caisses d'emballage (1) ne peuvent être ouvertes par le ou les destinataires correspondants,
(D) une fois que les critères prédéfinis sont satisfaits, la centrale de libération (100) génère un code d'autorisation (23ID) comprenant les numéros d'identification (3ID) des serrures électroniques (3) des caisses envoyées à chaque destinataire et les envoie aux destinataires correspondants,
(E) chaque destinataire fait lire le code d'autorisation (23ID) qu'il a reçu à son appareil d'autorisation (10) et, à l'aide de son appareil d'autorisation, change le statut de sa clef électronique de clef non-autorisée (12n) à clef autorisée (12a) pour les serrures électroniques qui lui correspondent et qui sont contenues dans le code d'autorisation (23ID) qu'il a reçu, et
(F) chaque destinataire peut déverrouiller la serrure électronique des caisses d'emballage (1) qu'il a reçues à l'aide de sa clef autorisée (12a) et peut avoir accès à l'article (30) qui satisfait les critères prédéfinis.

6. Méthode selon la revendication 5, dans laquelle l'article (30) est un radioisotope de ½-vie de préférence inférieure à 24h, la méthode comprenant les étapes suivantes,
• un producteur produit le radioisotope et enferme le radioisotope dans des fioles (30f),
• le producteur analyse le radioisotope produit afin de déterminer s'il est conforme à des critères de qualité du radioisotope définissant les critères prédéfinis,
• l'expéditeur emballe chaque fiole (30f) dans une caisse d'emballage (1) et verrouille la serrure électronique (3) avec le couvercle (1c) en position fermée,
• les caisses d'emballage (1) sont livrées à un ou plusieurs destinataires, chaque destinataire possédant un appareil d'autorisation (10) et au moins une clef électronique non-autorisée (12n),
• le ou les destinataires stockent les caisses d'emballage (1) qui ne peuvent être ouvertes sans les codes d'autorisation correspondants permettant de passer les clefs non-autorisées (12n) au statut de clefs autorisées (12a) permettant de les ouvrir,
• une fois que les analyses du radioisotope sont terminées et que le radioisotope est considéré comme étant conforme aux critères de qualité prédéfinis, le producteur génère un code d'autorisation (23ID) comprenant les numéros d'identification (3ID) des serrures électroniques (3) des caisses envoyées à chaque destinataire et les envoie aux destinataires correspondants,
• chaque destinataire fait lire le code d'autorisation (23ID) qu'il a reçu à son appareil d'autorisation (10) et, à l'aide de son appareil d'autorisation, change le statut de sa clef électronique de clef non-autorisée (12n) à clef autorisée (12a) pour les serrures électroniques qui lui correspondent et qui sont contenues dans le code d'autorisation (23ID) qu'il a reçu, et
• chaque destinataire peut déverrouiller les caisses d'emballage (1) qu'il a reçues avec la clef autorisée (12a) et peut avoir accès à le radioisotope (30) qui est certifié conforme aux critères de qualité.

7. Méthode selon la revendication 6, dans laquelle la fiole (30f) est enfermée dans un récipient (5) blindé qui est lui-même enfermé dans la caisse d'emballage (1) formant ainsi de préférence un colis de Type A.

8. Méthode selon la revendication 6 ou 7, dans laquelle un temps (tB) nécessaire à compléter les analyses du radioisotope et à déterminer si le radioisotope est conforme aux critères de qualité du radioisotope,
• est plus long qu'un temps tC nécessaire à l'emballage du radioisotope (étape C) (i.e., tB > tC) et
• est de préférence plus long qu'un temps (tC + tD) nécessaire à l'emballage du radioisotope (étape C) et à sa livraison à l'un ou aux plusieurs destinataires (étape D) (i.e. tB > (tC + tD)), laissant les caisses d'emballage (t1) verrouillées chez l'un ou plusieurs destinataires pendant un temps (tE = tB - (tC + tD)), jusqu'à la réception du code d'autorisation (23ID) .

9. Méthode selon la revendication précédente 8, dans laquelle le temps (tB) nécessaire à compléter les analyses du radioisotope et à déterminer si le radioisotope est conforme aux critères de qualité du radioisotope est inférieur à deux ½-vie, tR, du radioisotope, de préférence inférieur à une ½ vie, tR, du radioisotope (i.e., tB < 2tR, de préférence, tB < tR).

10. Méthode selon l'une quelconque des revendications 6 à 9, dans laquelle la ½-vie du radioisotope (30) n'est pas plus que 14h ; de préférence pas plus que 6h, encore pas plus que 2h.

11. Méthode selon la revendication précédente 10, dans laquelle le radioisotope est choisi parmi, ¹³N de ½-vie de 10 min, ou ¹¹C de ½-vie de 20 min, ⁶⁸Ga de ½-vie de 68 min, ou ¹⁸F de ½-vie de 110 min, ou ^{99m}Tc de ½-vie de 6 h, ou ¹²³I de ½-vie de 13.2 h.

12. Méthode selon la revendication 5, dans laquelle,
• L'article (30) est livré à l'un ou aux plusieurs destinataires avant paiement de celui-ci et les critères prédéfinis incluent réception du paiement pour l'article, ou
• L'article (30) est un produit chimique et les critères prédéfinis incluent une conformité à des critères de qualité requérant des analyses, ou
• L'article (30) est un produit chimique ou un médicament dont l'utilisation est soumise à une approbation préalable d'un supérieur hiérarchique qui est éloignée du lieu de stockage de l'emballage (1), ou
• L'article (30) ne peut être accessible qu'à une date prédéfinie, de préférence la date est prédéfinie par contrat ou par loi.

13. Méthode selon l'une quelconque des revendications 5 à 12, dans laquelle une fois autorisée, la clef électronique autorisée (12a) redevient automatiquement non-autorisée (12n) après un temps prédéterminé ou après le déverrouillage de la serrure électronique correspondante.

14. Méthode selon l'une quelconque des revendications 5 à 13, dans laquelle si les critères prédéfinis ne sont pas satisfaits, l'expéditeur ou le tiers n'envoie pas le code d'autorisation (23ID) et informe chaque destinataire que les caisses d'emballage (1) correspondantes seront reprises par l'expéditeur ou le tiers.
